# EUROPEAN PATENT APPLICATION

(11) **EP 4 851 842 A1**
(43) Date of publication of application: **09.12.2026**
(21) Application number: 25305829.1
(22) Date of filing: 06.06.2025
(51) Int. Cl.: G06F 21/60, H04L 9/08, H04L 9/40

(54) **METHOD FOR SECURELY EXCHANGING DATA BETWEEN A REMOTE APPLICATION AND A MULTITENANT APPLICATION**

(71) Applicant: THALES DIS FRANCE SAS, 92190 Meudon (FR); THALES, 92190 Meudon (FR)
(72) Inventor: SOLÉ SALA, Cyril, 13470 Carnoux en Provence (FR); AFFOUARD, Baptiste, 06200 Nice (FR); ALIBERT, Jérôme, 13720 La Bouilladisse (FR); FERRAND, Pierre, 37300 Joué-lès-Tours (FR); GRIMEAU, Theo, 13100 Aix en Provence (FR)
(74) Representative: Grevin, Emmanuel

(57) **Abstract**

The invention is a method for securely exchanging a bank data between a bank application (11) hosted by a remote center (31) and a multitenant application (60) hosted in a SaaS environment (70). A relay system (80) is provided between the bank application and the multitenant application. The relay system comprises both a customer peer (21) hosted in the remote center and a proxy equipment (50) hosted in the SaaS environment. Bank data is sent in unencrypted format using a first legacy protocol by the bank application to the customer peer. Bank data is communicated in a first encrypted format using a first secure protocol between the customer peer and a proxy peer (20) comprised in the proxy equipment. Bank data is transferred using a second legacy protocol from the proxy equipment to the multitenant application using a secure socket opened with a server name indication.

## Description

### (Field of the invention)

The present invention relates to methods for exchanging data between a remote application and a multitenant application. It relates particularly to methods for securely exchanging bank data between a bank application hosted by a remote center and a multitenant application which is hosted by a SaaS (Software as a Service) environment.

### (Background of the invention)

The payment services of a bank, traditionally hosted on-premises are exchanging business messages in legacy binary protocol, such as ISO8583. Such protocol has been traditionally running over TCP/IP (Transmission Control Protocol/Internet Protocol) network within a perimetrically protected private datacenter.

Today, some banks are looking at cloud technology to improve their platforms. While API-based bank products are very popular in the public cloud, legacy protocols are difficult to lift to the public cloud because they are transmitting sensitive data such as credit card numbers, without any built-in applicative encryption.

Bank regulations prohibit unsecure protocols in public networks and in the public cloud. Existing solutions are costly, difficult to maintain, not scalable, not multitenant, or require an important product refactoring which slow down the adoption of cloud-based solutions by the banks.

A classical approach for securing a cloud communication is the usage of a VPN (Virtual Private Network) as defined by Internet Protocol Security (IPSec). This is a de facto standard that converts any public network in a private one. But one of its notable limitations is the fact that only a point-to-point connection is possible, a tunnel is maintained up and running, and redundancy is achieved by multiplying the tunnels. These constraints are making the computer always communicating. If there are multiple sites (whether they are active or passive) to interconnect the number of tunnels grows exponentially. This is bringing a complexity that is incompatible with large scale deployment of cloud-based SaaS solutions.

Another classical approach would be to encapsulate the legacy protocol in a modern secure protocol, typically by using Transport Layer Security (TLS). This is a convenient and scalable solution, but it requires a protocol conversion, or encapsulation on both sides. This requires substantial development efforts for SaaS solutions. In addition, TLS propose a certificate mechanism convenient for protecting the client against a malicious server, but when a two-way trust relationship is required, it is necessary to use mutual TLS or even more complicated protocol to implement in the customer application. Integration of mutual TLS in applications is complex and costly, consequently this approach is not suitable for multi tenancy systems.

### (Summary of the Invention)

There is need to propose a method and equipment that allow in-transit data encryption, in a scalable way, with routing capabilities that allow the secure transport of sensitive data from on-premises datacenters to a multitenant SaaS (Software as a Service) application through a zero-trust environment such as the Internet and the public cloud.

The invention aims at solving the above-mentioned technical problem.

An object of the present invention is a computed-implemented method for securely exchanging a bank data between a bank application hosted by a remote center and a multitenant application hosted in a SaaS environment. The method comprises the following steps:
providing a relay system between the bank application and the multitenant application, said relay system comprising both a customer peer hosted in the remote center and a proxy equipment hosted in the SaaS environment;
conveying the bank data in an unencrypted format using a first legacy protocol between the bank application and the customer peer;
communicating said bank data in a first encrypted format using a first secure protocol between the customer peer and a proxy peer comprised in the proxy equipment, said bank data being enciphered in the first encrypted format independently of the first secure protocol;
transferring said bank data using a second legacy protocol between the proxy equipment and the multitenant application, said transferring relying on a secure socket opened with a Server Name Indication (SNI).

Advantageously, the conveying may be performed by sending the bank data from the bank application to the customer peer. The communicating may be performed by the customer peer by enciphering said bank data using a pre-provisioned first public key (PuK_R) assigned to the proxy peer, then sending to the proxy peer both the bank data in the first encrypted format and a second public key (PuK_I) previously assigned to the customer peer. The transferring may be performed by the proxy equipment by decrypting the enciphered bank data using a first private key (PrK_R) previously assigned to the proxy equipment, and retrieving an identifier (Peer_Id1) of the customer peer by using the second public key (PuK_I), said secure socket being opened with the Server Name Indication comprising said identifier (Peer_Id1) of the customer peer.

Advantageously, the proxy equipment may comprise a client unit that is designed to act as a client in a client-server communication. The proxy peer may forward the bank data in an internal format to the client unit using an internal protocol, and the client unit may open the secure socket then send the bank data to the multitenant application.

Advantageously, the proxy equipment may perform a pre-authorization check of use of said second public key (PuK_I) or of use of a pre-provisioned customer address (address_I) allocated to the customer peer and the transferring may be conditional on a success of said check.

Advantageously, the Server Name Indication (SNI) used to open the secure socket may contain an identifier (Peer_Id2) of the customer peer. The transferring may be performed by sending the bank data from the multitenant application to the proxy equipment. The communicating may be performed by the proxy peer by enciphering said bank data using a pre-provisioned second public key (PuK_I) assigned to the customer peer (22) then sending to the customer peer both the bank data in the first encrypted format and a first public key (PuK_R) previously assigned to the proxy peer. The conveying may be performed by the customer peer by decrypting the enciphered bank data using a second private key (PrK_I) previously assigned to the customer peer, then sending the bank data from customer peer to the bank application.

Advantageously, the proxy equipment may comprise a server unit which is designed to act as a server in a client-server communication. The multitenant application may open said secure socket then send the bank data to the server unit, and the server unit may forward the bank data in an internal format to the proxy peer using an internal protocol.

Advantageously, the customer peer may perform a pre-authorization check of use of said first public key (PuK_R) or of use of a pre-provisioned proxy address (address_R) allocated to the proxy peer and the conveying may be conditional on a success of said check.

Advantageously, the second legacy protocol may be the Transport Layer Security (TLS).

Advantageously, the customer peer may have a customer address (address_I) and the proxy peer may have a proxy address (address_R). During a pairing phase:
the proxy peer may generate a first asymmetric key pair comprising both said first private key (PrK_R) and first public key (PuK_R) and share both the proxy address (address_R) and the first public key (PuK_R) with the customer peer through a first out-of-band channel;
the customer peer may associate the proxy address (address_R) with the first public key (PuK_R) then save them in its own non-volatile memory;
the customer peer may generate a second asymmetric key pair comprising both a second private key (PrK_I) and the second public key (PuK_I) and share both the customer address (address_I) and the second public key (PuK_I) with the proxy peer through a second out-of-band channel;
the proxy peer may associate the customer address (address_I) with the second public key (PuK_I) then save them in its own non-volatile memory.

Another object of the present invention is a relay system for securely exchanging a bank data between a bank application hosted by a remote center and a multitenant application hosted in a SaaS environment. The relay system is provided between the bank application and the multitenant application. The relay system comprises both a customer peer hosted in the remote center and a proxy equipment hosted in the SaaS environment. The relay system is configured to:
convey the bank data in an unencrypted format using a first legacy protocol between the bank application and the customer peer;
communicate said bank data in a first encrypted format using a first secure protocol between the customer peer and a proxy peer comprised in the proxy equipment; and
transfer said bank data using a second legacy protocol between the proxy equipment and the multitenant application, said transfer relying on a secure socket opened with a Server Name Indication (SNI).

Advantageously, the bank application may be configured to send the bank data to the customer peer. The customer peer may be configured to encipher the bank data using a pre-provisioned first public key (PuK_R) assigned to the proxy peer then to send to the proxy peer both the bank data in the first encrypted format and a second public key (PuK_I) previously assigned to the customer peer. The proxy equipment may be configured to decrypt the enciphered bank data using a first private key (PrK_R) previously assigned to the proxy equipment, to retrieve an identifier (Peer_Id1) of the customer peer by using the second public key (PuK_I), and to open said secure socket with a Server Name Indication comprising the identifier (Peer_Id1) of the customer peer.

Advantageously, the proxy equipment may comprise a client unit configured to act as a client in a client-server communication. The proxy peer may be configured to forward the bank data in an internal format to the client unit using an internal protocol, and the client unit may be configured to open said secure socket then to send the bank data to the multitenant application.

Advantageously, the Server Name Indication (SNI) used to open the secure socket may contain an identifier (Peer_Id2) of the customer peer. The multitenant application may be configured to send the bank data to the proxy equipment. The proxy peer may be configured to encipher said bank data using a pre-provisioned second public key (PuK_I) assigned to the customer peer then to send to the customer peer both the bank data in the first encrypted format and a first public key (PuK_R) previously assigned to the proxy peer. The customer peer may be configured to decrypt the enciphered bank data using a second private key (PrK_I) previously assigned to the customer peer, then to send the bank data from customer peer to the bank application.

Advantageously, the proxy equipment may comprise a server unit configured to act as a server in a client-server communication. The multitenant application may be configured to open said secure socket then to send the bank data to the server unit. The server unit may be configured to forward the bank data in an internal format to the proxy peer using an internal protocol.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows details of an exemplary flow diagram for sending bank data from a legacy bank application to a multitenant application according to the invention,
Fig. 2 shows details of an exemplary flow diagram for sending bank data from a multitenant application to a legacy bank application according to the invention,
Fig. 3 shows details of an exemplary flow diagram for pairing a customer peer and a proxy peer according to an example of the invention, and
Fig. 4 shows a diagram of architecture of a relay system for exchanging bank data between a legacy bank application and a multitenant application according to an example of the invention.

### (Detailed description of the preferred embodiments)

SaaS stands for software as a service. In a SaaS environment, a user typically accesses Saas products/services via the cloud or the Internet. SaaS environments are usually multitenant and share physical resources (like processors and memories) between multiples clients.

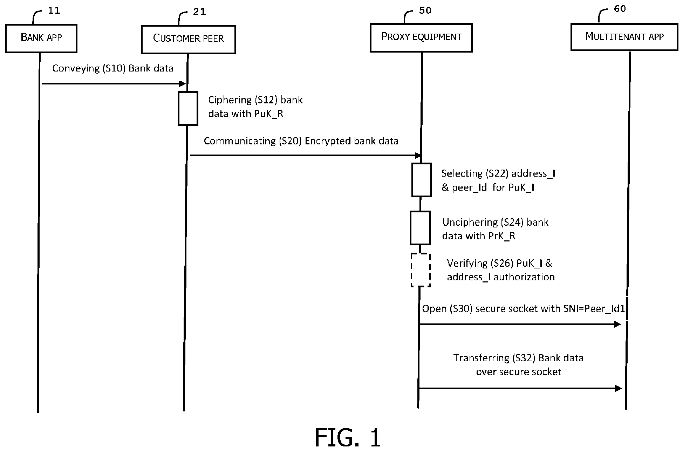

Fig. 1 depicts details of an exemplary flow diagram for securely sending bank data from a legacy bank application to a multitenant application according to the invention.

In this example, a legacy bank application 11 is hosted in a remote center (sometimes named bank data center) which may be managed by a financial institution like a bank or a trusted entity acting on behalf of a bank. Usually, the remote center comprises one or more physical computers and is considered as a trusted area controlled by the financial institution.

The legacy bank application 11 may be designed to manage payment transactions, cash withdrawals or any actions a customer is expected to request in relation to a bank account opened with the financial institution.

The bank application 11 is a legacy application because it can be an already deployed bank application whose functions do not need to be upgraded to exchange bank data according to the invention.

A multitenant application is hosted in a SaaS environment. The multitenant application may be designed to manage bank data for a number of different financial institutions.

The multitenant application may be a bank application able to provide an authorization for a payment transaction or to perform a payment process (i.e**.** funds transfer).

The multitenant application may be a merchant application able to provide online merchant services like purchase of digital service or manufactured products.

The bank data can encompass a large number of data types like customer name, bank account reference, merchant name, payment instrument reference, money amount, currency, date, reference of bought goods or services.

The SaaS environment is considered as a trusted area controlled by an administrator with whom the financial institution can enter into an agreement to access services of the SaaS environment.

The remote center can access the SaaS environment through the cloud or any combination of public/private communication networks which is considered as an unsecured area.

In a first phase, a relay system is provided between the bank application and the multitenant application. The relay system comprises a customer peer 21 which is installed in the remote center and designed to exchange data with the legacy bank application 11. The relay system also comprises a proxy equipment 50 which is installed in the SaaS environment.

Then, during a conveying step (step S10), the bank data is conveyed in an unencrypted format using a first legacy protocol from the bank application 11 to the customer peer 21. Since bank data stay in a trusted area (e.g. the remote center) during the conveying step, bank data can remain in clear format (i.e. unencrypted format) when sent from the bank application to the customer peer.

Then the customer peer encrypts (step S12) the bank data in a first encrypted format. Then, during a communicating step (S20), the customer peer sends to the proxy equipment the encrypted bank data using a first secure protocol.

It can be noted that the manner to encipher the bank data in a first encrypted format is independent of the first secure protocol used to send the encrypted bank data to the proxy equipment. In particular, the first secure protocol can add a new ciphering treatment specific to its own transport layer.

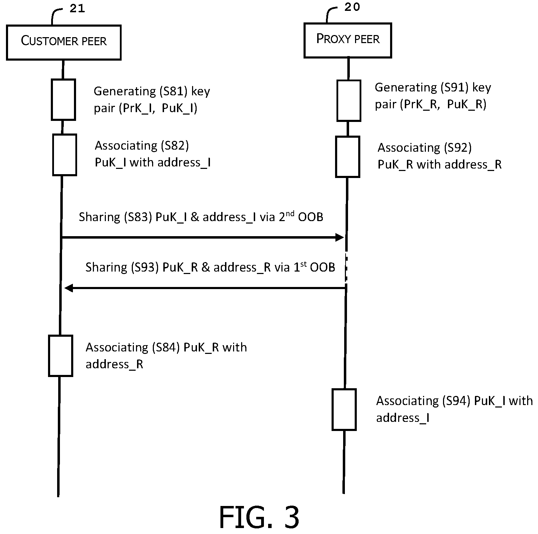

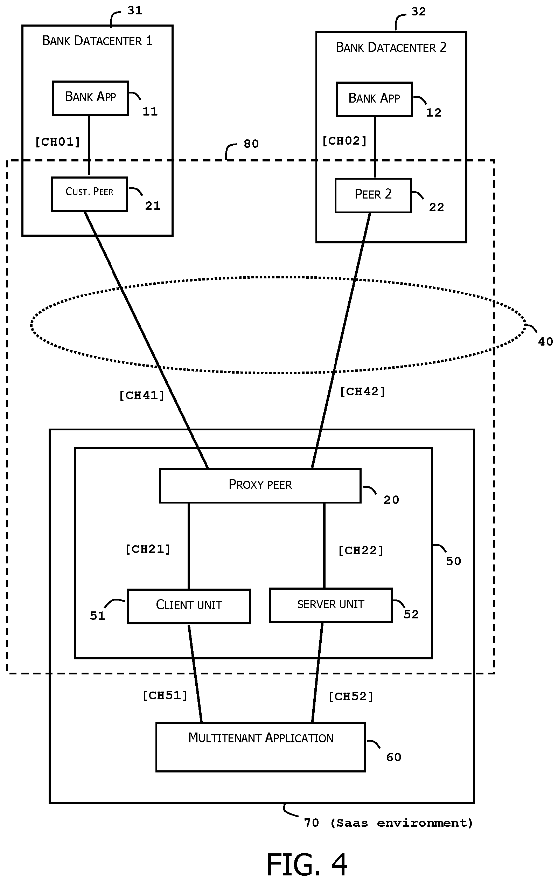

In a preferred embodiment, the proxy equipment comprises a proxy peer 20 (See Fig. 3 & 4 for more details) and the customer peer sends to the proxy peer the bank data in the first encrypted format. More precisely, the customer peer sends the encrypted bank data to a receiving address "address_R" which has been allocated to the proxy peer.

Then, during a transferring step (S32), the proxy equipment transfers to the multitenant application the bank data in a second encrypted format using a second legacy protocol. The bank data transferring relies on a secure socket opened (step S30) by the proxy equipment with a Server Name Indication (SNI).

Preferably, the second legacy protocol is the Transport Layer Security (TLS).

Preferably, the SNI is a Server Name Indication as defined by RFC 6066.

In some embodiments, the secure socket is opened with the Server Name Indication comprising the identifier (Peer_Id1) of the customer peer 21. The conveying step is performed by sending the bank data from the bank application to the customer peer. Then, the communicating step is performed by the customer peer 21 which enciphers the bank data using a pre-provisioned first public key (PuK_R) assigned to the proxy peer (to generate encrypted bank data), and sends to the proxy peer both the bank data in the first encrypted format and a second public key (PuK_I) previously assigned to the customer peer.

Then, the transferring step is performed by the proxy equipment 50 which decrypts the enciphered bank data (i.e. the bank data received in the first encrypted format) using a first private key (PrK_R) previously assigned to the proxy equipment, and retrieves (step S22) both an identifier (Peer_Id1) of the customer peer 21 and a target address (address_I) assigned to the multitenant application 60 by using the second public key (PuK_I).

In some embodiments, the proxy equipment 50 comprises a client unit 51 (See Fig. 4 for more details) which is designed to act as a client in a client-server communication. The proxy peer 20 forwards the bank data in an internal format to the client unit using an internal protocol. The client unit opens the secure socket, then sends the bank data to the multitenant application over the secure socket.

It can be noted that the bank data sent to the multitenant application bank can be enciphered by the transport layer of the used communication protocol. In other words, the fact that the bank data are sent in an encrypted format or in clear format can depend on the used communication protocol.

In some embodiments, the proxy peer 20 and the client unit can be merged in a single software component.

In some embodiments, for security reasons, the proxy equipment 50 performs a pre-authorization check (step S26) of use of the second public key (PuK_I) and/or of use of a pre-provisioned customer address (address_I) allocated to the customer peer 21 and execution of the transferring step is conditional on a success of the pre-authorization check.

In other words, if the check of the right to use of the second public key (PuK_I) or the check of the right to handle bank data originated from customer address (address_I) of the customer peer fails, the proxy equipment 50 stop the transaction and do not forward the bank data to the multitenant application.

The check of the right to use of the second public key (PuK_I) can consist in verifying that the second public key (PuK_I) has been previously registered in the proxy equipment.

In some embodiments, the check of the second public key (PuK_I) can be performed before the above-presented step S22.

It should be noted that once a complete communication channel (i.e. the point-to-point communication channel between the bank application and the multitenant application established via the relay system) has been established at the bank application's initiative, the multitenant application can send other data or messages to the bank application using the communication channel that has been established. (i.e. using the same secure socket)

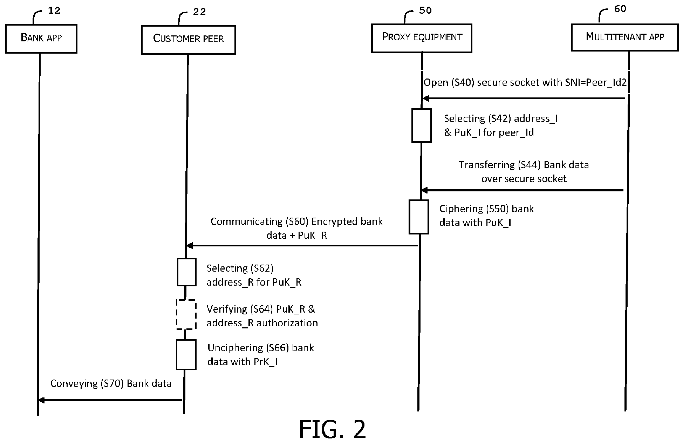

Fig. 2 depicts details of an exemplary flow diagram for securely sending bank data from a multitenant application 60 to a legacy bank application 12 according to the invention.

In this example, a bank application 12 is hosted in a remote center which may be managed by a financial institution like a bank. The bank application 12 may be like the bank application 11 of Figure 1.

The multitenant application is hosted in a SaaS environment. The multitenant application can be the same as the one of Figure 1.

In a first phase, a relay system is provided between the bank application and the multitenant application. The relay system comprises a customer peer 22 which is installed in the remote center and designed to exchange data with the legacy bank application 12. The relay system also comprises a proxy equipment 50 which is installed in the SaaS environment.

The multitenant application opens (step S40) a secure socket with the proxy equipment 50 using a Server Name Indication (SNI) that contains an identifier (Peer _Id2) of the customer peer 22.

Then, the proxy equipment 50 uses the identifier (Peer _Id2) which has been set on the SNI of the secure socket to select (step S42) both a destination address "address_I" allocated to the customer peer 22 and a pre-provisioned public key (PuK_I) assigned to the customer peer 22.

Then, during a transferring step (S44), the multitenant application sends the bank data to the proxy equipment over the secure socket through a legacy protocol.

Then, the proxy equipment 50 performs the communicating step (S60) by enciphering (step S50) the bank data using the public key (PuK_I) assigned to the customer peer 22, then by sending to the customer peer both the bank data in the first encrypted format and a public key (PuK_R) previously assigned to the proxy peer.

Then, the customer peer 22 selects (step S62) a target address (address_R) assigned to the bank application 12 using the received public key (PuK_R).

Then, the customer peer 22 performs the conveying step (S70) by decrypting (step S66) the enciphered bank data using a second private key (PrK_I) previously assigned to the customer peer then by sending the bank data to the bank application 12 through a first legacy protocol.

Preferably the legacy protocol is the Transport Layer Security (TLS).

In some embodiments, the proxy equipment 50 comprises both a proxy peer 20 (See Fig. 3 & 4 for more details) and a server unit 52 which is configured to act as a server in a client-server communication model. The multitenant application opens the secure socket, then sends the bank data to the server unit 52. Then, the server unit 52 forwards the bank data in an internal format to the proxy peer 20 using an internal protocol.

In some embodiments, the internal format and the internal protocol can be defined by ISO8583 standard.

In some embodiments, the internal format and the internal protocol can be designed by ISO20022 or a proprietary protocol.

In some embodiments, the customer peer can perform a pre-authorization check (step S64) of use of the first public key (PuK_R) or of use of a pre-provisioned proxy address (address_R) allocated to the proxy peer 20 and the conveying is conditional on a success of the check.

As those skilled in the art understand, some of above-presented steps can be performed in a different order. For instance, step S44 can be performed before step S42.

Fig. 3 depicts details of an exemplary flow diagram for pairing a customer peer and a proxy peer according to an example of the invention.

More precisely, the example of Figure 3 shows the pairing operation of the customer peer 21 and the proxy peer 20 mentioned in relation with Figure 1.

The customer peer 21 has a customer address "address_I" and the proxy peer 20 has a proxy address "address_R".

The customer address and the proxy address can be set to specific Internet Protocol (IP) addresses or Uniform Resource Locator (URL).

During the pairing phase, the proxy peer 20 generates (step S91) a first asymmetric key pair comprising both a first private key "PrK_R" and first public key "PuK_R".

The customer peer 21 may associate (step S92) the proxy address "address_R" with the first public key "PuK_R" then save both in a non-volatile memory it controls.

Then, proxy peer 20 shares (step S93) both its own proxy address "address_R" and the first public key "PuK_R" with the customer peer 21 through a first out-of-band channel.

The first out-of-band channel can be a digital channel relying on emails or a communication channel. Alternatively, data may be shared by oral, USB dongle or via a certified envelope with an anti-tampering seal.

In some embodiments, the proxy peer 20 may retrieve the first asymmetric key pair from a trusted key manager instead of generating the key pair.

Then, the customer peer 21 associates (step S84) the received proxy address "address_R" with the received first public key "PuK_R" then saves both the proxy address "address_R" and the received first public key in a non-volatile memory it controls.

During the pairing phase, the customer peer 21 generates (step S81) a second asymmetric key pair comprising both a second private key "PrK_I" and a second public key "PuK_I".

The customer peer 21 may associate (step S82) the second public key "PuK_I" with the customer address "address_I" and store them into a non-volatile memory it controls.

Then, the customer peer 21 shares (step S83) both the customer address "address_I" and the second public key PuK_I" with the proxy peer 20 through a second out-of-band channel. The second out-of-band channel can be a conventional out-of-band channel.

Then, the proxy peer 20 associates (step S94) the received customer address "address_I" with the received second public key "PuK_I", then saves both the customer address "address_I" and the received second public key in a non-volatile memory area whose access is controlled by the proxy peer 20.

Fig. 4 depicts a diagram of architecture of a relay system 80 for securely exchanging bank data between legacy bank applications 11 & 12 and a multitenant application 60 according to an example of the invention.

A remote center 31 hosts a bank application 11 and a remote center 32 hosts a bank application 12. The remote center 31 is considered as a trusted area controlled by a first bank. Likewise, the remote center 32 is considered as a trusted area controlled by a second bank. In some embodiment, the two remote centers 31 & 32 can be controlled by the same bank or merged in a single data center.

A SaaS environment 70 hosts a multitenant application 60. The SaaS environment 70 is considered as a trusted area.

A relay system 80 is placed between the bank applications 11 & 12 and the multitenant application 60. The relay system 80 comprises a first customer peer 21 installed in the remote center 31, a second customer peer 22 installed in the remote center 32 and a proxy equipment 50 installed in the SaaS environment 70.

The proxy equipment 50 comprises a proxy peer 20, a client unit 51 and a server unit 52.

The client unit 51 is configured to act as a client in a client-server communication scheme. The server unit 52 is configured to act as a server in a client-server communication model.

The SaaS environment 70 comprises one or more hardware processors and program instructions to operate software applications (proxy peer 20, client unit 51, server unit 52 and multitenant application 60) hosted in the SaaS environment, when executed by the hardware processor (s) .

The SaaS environment 70 can be implemented in a secure place such as a harden software, an isolated hardware such as a CPU, a secure enclave or Network enclave, or a dedicated hardware machine like a hardware security module (HSM).

The remote center 31 comprises one or more hardware processors and program instructions to operate software applications (bank applications 11 and first customer peer 21) installed in the remote center 31, when executed by the hardware processor(s). Similarly, the remote center 32 comprises one or more hardware processors and program instructions to operate software applications (bank applications 12 and second customer peer 22) installed in the remote center 32, when executed by the hardware processor(s).

The relay system 80 is configured to convey bank data in an unencrypted format using a legacy protocol CH01 between the bank application 11 and the first customer peer 21. Likewise, the relay system 80 is configured to convey bank data in an unencrypted format using a legacy protocol CH02 between the bank application 12 and the second customer peer 22.

The relay system 80 is configured to communicate bank data in an encrypted format using a secure protocol CH41 between the first customer peer 21 and the proxy peer 20. The relay system 80 is configured to communicate bank data in an encrypted format using a secure protocol CH42 between the second customer peer 22 and the proxy peer 20.

The secure protocol CH41 can be established on a combination of public or private networks. Preferably, the secure protocol CH41 is established on the Internet 40.

The relay system 80 is configured to transfer bank data in an encrypted format using a legacy protocol CH51 between the proxy equipment 50 and the multitenant application 60. This transfer relies on a secure socket opened with a Server Name Indication (SNI).

The relay system 80 is configured to transfer bank data in an encrypted format using a legacy protocol CH52 between the proxy equipment 50 and the multitenant application 60. This transfer relies on a secure socket opened with a Server Name Indication.

In some embodiments, the legacy protocol CH51 and/or legacy protocol CH52 can be the Transport Layer Security (TLS).

In some embodiments, bank data sent through the legacy protocol CH51 or CH52 may comply with the format defined by ISO8583 or ISO20022 standard.

In the example of Fig. 4, the bank application 11 is configured to send the bank data in an unencrypted format to the customer peer 21 via a legacy protocol CH01.

The legacy protocol CH01 can be defined by ISO8583 standard, ISO20022 standard or any other appropriate specifications.

The customer peer 21 is configured to encipher the bank data (received from the legacy bank application 11) using a pre-provisioned public key "PuK_R" which is assigned to the proxy peer 20. Then, the customer peer 21 is configured to send to the proxy peer both the enciphered bank data (i.e. the bank data in a first encrypted format) and a public key "PuK_I" previously assigned to the customer peer 21.

The proxy equipment 50 is configured to decrypt the enciphered bank data using a private key "PrK_R" previously assigned to the proxy equipment, to retrieve an identifier "Peer_Id1" of the customer peer 21 by using the second public key "PuK_I", and to open a secure socket on the multitenant application using a Server Name Indication comprising the identifier "Peer_Id1" of the customer peer 21.

Preferably, the proxy peer 20 is configured to forward the bank data (received from the customer peer 21) in an internal format to the client unit 51 using an internal protocol CH21 and the client unit 51 is configured to open the secure socket (on the multitenant application) then to send the bank data to the multitenant application 60.

The multitenant application 60 can initiate a communication channel with the bank application 12. Preferably, the multitenant application 60 is configured to open the secure socket on the server unit 52 using a Server Name Indication (SNI) which contains the identifier "Peer_Id2" of the second customer peer 22.

It can be noted that the identifier "Peer_Id2" contained in the SNI is used to declare the target of the sent data, knowing that the second customer peer 22 is uniquely bound to the legacy application 12. Moreover, it can be noted that the SNI comprises the identifier of an entity acting as a client with respect to the proxy equipment 50 that acts as a server in this case.

The multitenant application is configured to send the bank data to the server unit 52 over the secure socket.

The server unit 52 is configured to forward the bank data in an internal format to the proxy peer 20 using an internal protocol CH22.

The proxy peer 20 is configured to encipher the bank data using a pre-provisioned public key "PuK_I" assigned to the second customer peer 22 then to send to the second customer peer both the bank data in the encrypted format and a public key "PuK_R" previously assigned to the proxy peer 20.

The second customer peer 22 is configured to decrypt the enciphered bank data using its own private key "PrK_I" (i.e. a private key previously assigned to the second customer peer 22 at a previous stage), then to send the bank data to the bank application 12 using a communication channel CH02.

Once a communication has been established between nodes (i.e. bank application and multitenant application) as shown in Fig. 2 or Fig. 3, asynchronous requests and responses can be transmitted from one point to the other one. Although requests and responses can be managed in asynchronous mode, a communication session can be maintained between two nodes to ensure a better performance.

Thanks to some embodiments of the invention, a multitenant application can securely exchange in both directions, through a zero-trust environment, sensitive data with a remote legacy bank application.

In some embodiments of the invention, the identity of the communication initiator (either a legacy bank application in a remote center) or the multitenant application is preserved up to the receiver. This allows to multiplex communications over a common entry point in the proxy equipment.

Some embodiments of the invention allow a true scalability based on existing transport encryption mechanisms compared to the state of the art, especially in the context of a multitenant cloud-based solution.

Some embodiments of the invention allow a back compatibility on the legacy binary protocol already deployed in the field, adding multi tenancy possibility, while remaining compatible with existing on-premises equipment for a seamless customer onboarding.

Thanks to some embodiments of the invention, client authentication is preserved with no need to implement and maintain mutual TLS.

Thanks to some embodiments of the invention, usage of legacy protocols such as ISO8583 can be kept with no changes at business software on each side of the communication, i.e. in each node like the bank application and the multitenant application.

Some embodiments of the invention relieve the need of maintaining persistent connections, making it frugal and ecofriendly.

Although described for the communication between a unique multitenant application and one or two legacy bank applications, the invention may apply to communication between a large number of legacy bank applications and one or more multitenant applications.

The invention is not limited to the described embodiments or examples. In particular, the described features of the presented embodiments may be combined as can be understood by those skilled in the art.

## Claims

1. A computed-implemented method for securely exchanging a bank data between a bank application (11,12) hosted by a remote center (31,32) and a multitenant application (60) hosted in a SaaS environment (70),
wherein the method comprises the following steps:
providing a relay system (80) between the bank application and the multitenant application, said relay system comprising both a customer peer (21,22) hosted in the remote center (31,32) and a proxy equipment (50) hosted in the SaaS environment (70);
conveying (S10, S70) the bank data in an unencrypted format using a first legacy protocol (CH01, CH02) between the bank application (11,12) and the customer peer (21,22);
communicating (S20, S60) said bank data in a first encrypted format using a first secure protocol (CH41,CH42) between the customer peer (21,22) and a proxy peer (20) comprised in the proxy equipment (50), said bank data being enciphered in the first encrypted format independently of the first secure protocol;
transferring (S32, S44) said bank data using a second legacy protocol (CH51, CH52) between the proxy equipment (50) and the multitenant application (60), said transferring relying on a secure socket opened with a Server Name Indication (SNI).

2. The method according to claim 1,
wherein said conveying is performed by sending the bank data from the bank application (11) to the customer peer (21);
wherein said communicating is performed by the customer peer (21) by enciphering said bank data using a pre-provisioned first public key (PuK_R) assigned to the proxy peer (20) then sending to the proxy peer both the bank data in the first encrypted format and a second public key (PuK_I) previously assigned to the customer peer (21); and
wherein said transferring is performed by the proxy equipment (50) by decrypting the enciphered bank data using a first private key (PrK_R) previously assigned to the proxy equipment, and retrieving an identifier (Peer_Id1) of the customer peer (21) by using the second public key (PuK_I), said secure socket being opened with the Server Name Indication comprising said identifier (Peer_Id1) of the customer peer (21).

3. The method according to claim 2, wherein the proxy equipment (50) comprises a client unit (51) designed to act as a client in a client-server communication,
wherein the proxy peer (20) forwards the bank data in an internal format to the client unit (51) using an internal protocol (CH21) and
wherein the client unit (51) opens said secure socket then sends the bank data to the multitenant application (60).

4. The method according to any of the claims 2 to 3, wherein the proxy equipment (50) performs a pre-authorization check of use of said second public key (PuK_I) or of use of a pre-provisioned customer address (address_I) allocated to the customer peer (21) and wherein said transferring is conditional on a success of said check.

5. The method according to claim 1, wherein the Server Name Indication (SNI) used to open the secure socket contains an identifier (Peer_Id2) of the customer peer (22);
wherein said transferring is performed by sending the bank data from the multitenant application (60) to the proxy equipment (50);
wherein said communicating is performed by the proxy peer (20) by enciphering said bank data using a pre-provisioned second public key (PuK_I) assigned to the customer peer (22) then sending to the customer peer (22) both the bank data in the first encrypted format and a first public key (PuK_R) previously assigned to the proxy peer (20); and
wherein said conveying is performed by the customer peer (22) by decrypting the enciphered bank data using a second private key (PrK_I) previously assigned to the customer peer (22), then sending the bank data from customer peer (22) to the bank application (12).

6. The method according to claim 5, wherein the proxy equipment (50) comprises a server unit (52) designed to act as a server in a client-server communication,
wherein the multitenant application (60) opens said secure socket then sends the bank data to the server unit (52); and
wherein the server unit (52) forwards the bank data in an internal format to the proxy peer (20) using an internal protocol (CH22).

7. The method according to any of the claims 5 to 6, wherein the customer peer (22) performs a pre-authorization check of use of said first public key (PuK_R) or of use of a pre-provisioned proxy address (address_R) allocated to the proxy peer (20) and wherein said conveying is conditional on a success of said check.

8. The method according to any of the preceding claims, wherein the second legacy protocol (CH51,CH52) is the Transport Layer Security (TLS).

9. The method according to claim 1, wherein the customer peer (21) has a customer address (address_I) and the proxy peer (20) has a proxy address (address_R) and wherein during a pairing phase:
the proxy peer (20) generates (S91) a first asymmetric key pair comprising both said first private key (PrK_R) and first public key (PuK_R) and share (S93) both the proxy address (address_R) and the first public key (PuK_R) with the customer peer (21) through a first out-of-band channel;
wherein the customer peer (21) associates (S84) the proxy address (address_R) with the first public key (PuK_R) then saves them in its own non-volatile memory;
the customer peer (21) generates (S81) a second asymmetric key pair comprising both a second private key (PrK_I) and the second public key (PuK_I) and share (S83) both the customer address (address_I) and the second public key (PuK_I) with the proxy peer (20) through a second out-of-band channel;
wherein the proxy peer (20) associates (S94) the customer address (address_I) with the second public key (PuK_I) then saves them in its own non-volatile memory.

10. A relay system (80) for securely exchanging a bank data between a bank application (11,12) hosted by a remote center (31,32) and a multitenant application (60) hosted in a SaaS environment (70),
wherein the relay system (80) is provided between the bank application and the multitenant application,
wherein the relay system comprises both a customer peer (21,22) hosted in the remote center (31,32) and a proxy equipment (50) hosted in the SaaS environment (70);
and wherein the relay system is configured to:
convey the bank data in an unencrypted format using a first legacy protocol (CH01, CH02) between the bank application (11,12) and the customer peer (21,22);
communicate said bank data in a first encrypted format using a first secure protocol (CH41,CH42) between the customer peer (21,22) and a proxy peer (20) comprised in the proxy equipment (50); and
transfer said bank data using a second legacy protocol (CH51, CH52) between the proxy equipment (50) and the multitenant application, said transfer relying on a secure socket opened with a Server Name Indication (SNI) .

11. The relay system according to claim 10, wherein the bank application (11) is configured to send the bank data to the customer peer (21);
wherein the customer peer (21) is configured to encipher the bank data using a pre-provisioned first public key (PuK_R) assigned to the proxy peer (20) then to send to the proxy peer both the bank data in the first encrypted format and a second public key (PuK_I) previously assigned to the customer peer (21); and
wherein the proxy equipment (50) is configured to decrypt the enciphered bank data using a first private key (PrK_R) previously assigned to the proxy equipment, to retrieve an identifier (Peer_Id1) of the customer peer (21) by using the second public key (PuK_I), and to open said secure socket with a Server Name Indication comprising the identifier (Peer_Id1) of the customer peer (21).

12. The relay system according to claim 11, wherein the proxy equipment (50) comprises a client unit (51) configured to act as a client in a client-server communication,
wherein the proxy peer (20) is configured to forward the bank data in an internal format to the client unit (51) using an internal protocol (CH21); and
wherein the client unit (51) is configured to open said secure socket then to send the bank data to the multitenant application (60).

13. The relay system according to claim 10, wherein the Server Name Indication (SNI) used to open the secure socket contains an identifier (Peer_Id2) of the customer peer (22);
wherein the multitenant application (60) is configured to send the bank data to the proxy equipment (50);
wherein the proxy peer (20) is configured to encipher said bank data using a pre-provisioned second public key (PuK_I) assigned to the customer peer (22) then to send to the customer peer both the bank data in the first encrypted format and a first public key (PuK_R) previously assigned to the proxy peer (20); and
wherein the customer peer (22) is configured to decrypt the enciphered bank data using a second private key (PrK_I) previously assigned to the customer peer (22), then to send the bank data from customer peer (22) to the bank application (12).

14. The relay system according to claim 13, wherein the proxy equipment (50) comprises a server unit (52) configured to act as a server in a client-server communication,
wherein the multitenant application (60) is configured to open said secure socket then to send the bank data to the server unit (52); and
wherein the server unit is configured to forward the bank data in an internal format to the proxy peer (20) using an internal protocol (CH22).

15. The relay system according to any of the claims 10 to 14, wherein the second legacy protocol (CH51, CH52) is the Transport Layer Security (TLS).
